Europäisches Patentamt

European Patent Office

Office européen des brevets

(11) Publication number: **0 322 171**
**A2**

# EUROPEAN PATENT APPLICATION

(21) Application number: 88312004.0

(22) Date of filing: **19.12.88**

(51) Int. Cl.⁴: **B65D 81/24 , B65D 81/26**

(30) Priority: **19.12.87 JP 321926/87**

(43) Date of publication of application:
**28.06.89 Bulletin 89/26**

(84) Designated Contracting States:
**DE FR GB NL**

(71) Applicant: **NISSHO & CO. LTD.**
**9-24, Minami Ikebukuro 1-chome Toshima-ku**
**Tokyo(JP)**

(72) Inventor: **Someya, Nobuo**
**16-6, Kami Ikebukuro 3-chome**
**Toshima-ku Tokyo(JP)**

(74) Representative: **Silverman, Warren et al**
**HASELTINE LAKE & CO. Hazlitt House 28**
**Southampton Buildings Chancery Lane**
**London WC2A 1AT(GB)**

(54) **Material for use in the preservation of perishable goods.**

(57) There is described a material for use in the preservation of perishable goods which comprises a raw material and coral sand in admixture. The coral sand is plated with silver only or with silver and zinc, or with silver, zinc and copper.

EP 0 322 171 A2

# MATERIAL FOR USE IN THE PRESERVATION OF PERISHABLE GOODS

This invention relates to material utilized in preserving perishable goods, and more specifically to material having a capability of maintaining the freshness of perishable goods.

A variety of methods have been employed for keeping perishable goods in a good condition in terms of their freshness etc. during transportation or storage. It is known that fresh vegetables release additional-maturation hormones such as ethylene and that the removal of such hormones gives a prolonged freshness to the vegetables when stored, for example, in a refrigerator. Typical methods of preserving perishable goods therefore utilize materials with a high adsorptivity to such hormones. An example of such a method is the use of activated carbon particles, or a sheet formed therefrom, which are disposed inside of a bag in which fresh goods are contained so that additional-maturation substances can be removed from inside of the bag. Another example is disclosed in Japanese Patent Public Disclosure No. 6193835 wherein porous materials having fine pores are subjected to an oxidation process and thereby become adsorptive materials, capable of adsorbing molecules of low molecular weight and oxidative-catalytic activity.

The known adsorptive materials, however, do not have a sufficient ability to keep goods fresh and are expensive to manufacture, so are not satisfactory in practice. In addition, it is desirable to provide the conventionally used adsorptive materials with some additional properties so that they can perform other functions, e.g. so that they have a sterilizing effect as well as the capability to adsorb, as disclosed in the above publication. This practice further increases the manufacturing cost of the adsorptive materials which is contrary to demand which is for decreased manufacturing cost.

According to a first aspect of the present invention, there is provided a material for use in the preservation of perishable goods, which material comprises a raw material and coral sand in admixture, wherein the coral sand is silver-plated.

The coral sand may be plated with zinc in addition to the silver.

The coral sand may be plated with copper in addition to the silver.

The coral sand may be plated with both copper and zinc in addition to the silver.

The coral sand may be prepared by crushing coral to about 20 to about 2000 mesh. Microscopic observation indicates that coral sand particles possess a large number of pores of a diameter ranging from about 10 to about 50 micrometre. Owing to these pores, coral sand particles have an extremely large surface area.

Although any size of coral sand particles may be used for the present invention, the size is preferably in the range of 100 to 2000 mesh. A size of greater than 500 mesh is particularly preferred as it allows for easy handling when mixing into a raw material.

Coral is a hard, stony substance formed from the massed skeletons of minute marine organisms called polyps and contains calcium carbonate as a main ingredient, calcium phosphate as a second ingredient, and, as trace constituents, potassium, magnesium, iron, sodium, strontium, and the like.

The properties of coral sand and their relationship to its ability to keep perishable foods fresh are as follows:

(a) Calcium carbonate main ingredient:
Consider, for example, the case where calcium carbonate chemically reacts with hydrogen sulphide which is released from fresh broccoli. The reaction can be represented by the following equations:
$$2H_2S + 3O_2 + CO_2 \rightarrow 2SO_3 + H_2O + HCHO;$$
and $SO_3 + CaCO_3 \rightarrow CaSO_4 + CO_2$ The resulting carbon dioxide gas serves to suppress maturation of the fresh broccoli.

(b) Porous structure:
Coral sand particles have fine pores of such a diameter that they have the ability to absorb gaseous materials. These fine pores serve to absorb, and subsequently allow dissolution of, gas released from fresh goods.

(c) pH adjustment by calcium carbonate:
Calcium carbonate serves to change the atmosphere of the environment of stored fresh goods and is capable of altering the pH of that environment from acid to alkaline. This suppresses oxidation of the fresh goods and maintains their freshness.

(d) Mineral content:
The coral sand contains various minerals which are capable of maintaining the freshness of fresh goods.

The amount of coral sand used is preferably between 0.1 wt % and 15 wt % of the total material.

The silver serves to improve the sterilizing and rot-prevention ability of the coral sand. The zinc serves to improve the bacterial-growth suppressing property of the coral sand. The copper serves to improve the bacterial-growth suppressing property of the coral sand and imparts a fungiproof property on the coral sand.

The amount of plated silver is preferably between 0.01 wt % and 15 wt %. Coral sand plated with silver the effects of silver plating, while coral sand plated with silver of more than 15 wt % can give rise to harmful affects to a human body. On the other hand, the amount of plated zinc or plated copper is preferably in the range of 0.1 to 10 wt %. The total amount of plated silver, zinc and copper is preferably between 1 to 15 wt %. The weight percentages given in this paragraph refer to the weight of metal plate with respect to either the total weight of coral sand present or to the total weight of coral sand and plated metal present.

The raw material used for the present invention may be selected from wood pulp, synthetic resin, natural fibre, synthetic fibre, clay, rubber, Japanese lacquer and the like. Suitable synthetic resins include polyethylene, polypropylene, polystyrene, polyvinyl chloride, acrylonitrile-butadiene-styrene, copolymer of ethylene and vinyl acetate, polyacrylate, polyurethane, urea resin, epoxy resin, phenols, nylon, polyvinyl alcohol, polyester and the like.

Material according to the first aspect of the present invention may be moulded into any suitable article which is capable of handling perishable goods. Such articles include trays, containers, chopping boards, wrapping papers, cups, bowls and the like.

According to a second aspect of the present invention there is provided an article formed from a material for use in the preservation of perishable goods, which material comprises a raw material and coral sand in admixture, the coral sand being silver-plated.

The material, and articles formed from that material, according to the present invention are advantageous in that they have one or more of the following: an ability to keep goods fresh; an ability to sterilize; an ability to suppress bacterial growth; have funigproof properties; and can be obtained at a low price.

The invention is illustrated, but in no way limited, by the following Example.

EXAMPLE

A polyethylene,used as the raw material, was mixed with coral sand that was plated with silver, zinc and copper, and the mixture was formed into a polyethylene sheet. The total amount of the plated silver, zinc and copper was adjusted to be in the range of 8 to 12 wt % with respect to either the total amount of coral sand present or to the total amount of coral sand and plated metal present.

A packaging bag was formed from the sheet. The bag was examined for its ability to keep goods fresh. The result was that the ability of the bag to keep goods fresh was superior to that of conventional freshness-keeping material with which it was compared.

Claims

1. A material for use in the preservation of perishable goods, which material comprises a raw material and coral sand in admixture, and wherein the coral sand is plated with silver.

2. A material according to claim 1, wherein the coral sand is also plated with zinc.

3. A material according to claim 1 or 2, wherein the coral sand is also plated with copper.

4. A material according to any preceding claim, wherein the coral sand is present in an amount in the range of 0.1 to 15 wt %.

5. A material according to any preceding claim, wherein the amount of plated silver is in the range of 0.01 to 15 wt %.

6. A material according to claim 2, wherein the total amount of plated silver and zinc is in the range of 1 to 15 wt %.

7. A material according to claim 3 when appendant to claim 2, wherein the total amount of plated silver, zinc and copper is in the range of 1 to 15 wt %.

8. A material according to any preceding claim, wherein the coral sand has a particle size in the range of from 100 to 2000 mesh.

9. A material according to claim 8, wherein the coral sand has a particle size of greater than 500 mesh.

10. A material according to any preceding claim, wherein the raw material is a synthetic resin.

11. A material according to claim 10, wherein the synthetic resin is polyethylene.

12. An article formed from a material for use in the preservation of perishable goods, which material comprises a raw material and coral sand in admixture, and wherein the coral said is silver-plated.